# EUROPEAN PATENT APPLICATION

(11) **EP 4 625 814 A1**
(43) Date of publication of application: **01.10.2025**
(21) Application number: 25160608.3
(22) Date of filing: 27.02.2025
(51) Int. Cl.: H02S 30/10, F24S 25/20

(54) **IRREGULAR-SHAPED FRAME FOR FIXING PHOTOVOLTAIC MODULE, PHOTOVOLTAIC MODULE, AND PHOTOVOLTAIC SYSTEM**

(30) Priority: 26.03.2024 CN 202420594513 U
(71) Applicant: Jinko Solar (Haining) Co., Ltd., Haining City, Zhejiang 314415 (CN); Zhejiang Jinko Solar Co., Ltd., Haining, Zhejiang 314416 (CN)
(72) Inventor: TAO, Wusong, HAINING, 314415 (CN); FENG, Jun, HAINING, 314415 (CN); LIU, Xinrui, Haining, 314415 (CN); LUO, Heng, Haining, 314415 (CN)
(74) Representative: Haseltine Lake Kempner LLP

(57) **Abstract**

The present invention discloses an irregular-shaped frame for fixing a photovoltaic module, the photovoltaic module, and a photovoltaic system. The irregular-shaped frame for fixing a photovoltaic module includes an upper frame and a lower frame; an accommodating space being formed between the upper frame and the lower frame; a first engaging structure being arranged on the upper frame, a first reinforcing member being arranged on the first engaging structure, a second engaging structure being arranged on the lower frame, and a second reinforcing member being arranged on the second engaging structure; a first flexible pad being arranged between the first reinforcing member and the photovoltaic module, a second flexible pad being arranged between the second reinforcing member and the photovoltaic module, and the photovoltaic module being fixed among the first flexible pad, a side wall of part of the lower frame, and the second flexible pad.

## Description

### TECHNICAL FIELD

The present invention relates to the technical field of photovoltaics, and in particular, to an irregular-shaped frame for fixing a photovoltaic module, the photovoltaic module, and a photovoltaic system.

### BACKGROUND

Since global energy problems become increasingly serious, a solar photovoltaic power generation technology attracts more attention and is more and more widely applied to various fields of industry and life. For example, mounting a solar power generation apparatus in an electric system in which real-time power supply is not available is a significant subject and receives attention of the industry.

Currently, a photovoltaic module can be fixed on a bracket keel through an irregular-shaped frame during mounting, an edge position where the irregular-shaped frame is connected to the photovoltaic module is a stress concentration position, and since the irregular-shaped frame is short, a great shear stress is generated at an edge of the irregular-shaped frame, so that a great shear stress is generated inside the photovoltaic module, resulting in a panel exploding risk of the photovoltaic module, which is consequently a technical problem required to be solved urgently in the field.

### SUMMARY

**In** view of this, the present invention provides an irregular-shaped frame for fixing a photovoltaic module, which is intended to solve the problem that a great shear stress is generated at an edge of an existing irregular-shaped frame, so that a great shear stress is generated inside an existing photovoltaic module, resulting in a panel exploding risk of the photovoltaic module.

In a first aspect, the present invention provides an irregular-shaped frame for fixing a photovoltaic module, including an upper frame and a lower frame that are buckled to each other; an an accommodating space for placing the photovoltaic module being formed between the upper frame and the lower frame;

a first engaging structure being arranged on a side of the upper frame adjacent to the accommodating space, a first reinforcing member being arranged on the first engaging structure, a second engaging structure corresponding to the first engaging structure being arranged on a side of the lower frame adjacent to the accommodating space, a second reinforcing member being arranged on the second engaging structure, and an extending direction of the first reinforcing member being the same as that of the second reinforcing member; a first flexible pad being arranged between the first reinforcing member and the photovoltaic module, a second flexible pad being arranged between the second reinforcing member and the photovoltaic module, and the photovoltaic module being fixed among the first flexible pad, a side wall of part of the lower frame, and the second flexible pad.

In a second aspect, the present invention further provides a photovoltaic module. When being mounted, the photovoltaic module is arranged in an accommodating space of the above irregular-shaped frame;
the photovoltaic module includes a laminated member and a protective frame, and the protective frame covers a circumferential edge of the laminated member;
the protective frame includes a bottom plate and a side plate connected to the bottom plate, a bottom wall of the circumferential edge of the laminated member is arranged on the bottom plate, and a side wall of the circumferential edge of the laminated member is adjacent to the side plate.

In a third aspect, the present invention further provides a photovoltaic system, including a bracket, the above photovoltaic module, and the above irregular-shaped frame;
the photovoltaic module is arranged in the accommodating space, when the first flexible pad is arranged between the first reinforcing member and the photovoltaic module, the first flexible pad is arranged on a top surface of the photovoltaic module, and a bottom surface of the protective frame is connected to the second flexible pad; and the lower frame is connected to the bracket.

Compared with the related art, the irregular-shaped frame for fixing the photovoltaic module, the photovoltaic module, and the photovoltaic system according to the present invention have at least the following beneficial effects.

According to the irregular-shaped frame for fixing the photovoltaic module, the photovoltaic module, and the photovoltaic system according to the present invention, the irregular-shaped frame for fixing the photovoltaic module includes the upper frame and the lower frame that are buckled to each other; the accommodating space for placing the photovoltaic module is formed between the upper frame and the lower frame; the first engaging structure is arranged on the side of the upper frame adjacent to the accommodating space, the first reinforcing member is arranged on the first engaging structure, the second engaging structure corresponding to the first engaging structure is arranged on the side of the lower frame adj acent to the accommodating space, the second reinforcing member is arranged on the second engaging structure, and the extending direction of the first reinforcing member is the same as that of the second reinforcing member; the first flexible pad is arranged between the first reinforcing member and the photovoltaic module, the second flexible pad is arranged between the second reinforcing member and the photovoltaic module, and the photovoltaic module is fixed among the first flexible pad, the side wall of the part of the lower frame, and the second flexible pad. By adopting the above solution, the first reinforcing member and the first flexible pad are introduced into the upper frame, and the second flexible pad and the second reinforcing member are introduced into the lower frame, so that the photovoltaic module can be effectively fixed to facilitate enhancement of a protection effect on the photovoltaic module. The photovoltaic module can also be locally enhanced to facilitate an improvement of reliability of the photovoltaic module, and meanwhile, the shear stress of an edge position where the irregular-shaped frame is connected to the photovoltaic module is subsequently reduced as much as possible, so as to reduce the panel exploding risk of the photovoltaic module as much as possible; the first reinforcing member and the second reinforcing member are convenient to engage through the first engaging structure and the second engaging structure, thus lowering assembly difficulty of the first reinforcing member and the second reinforcing member.

Certainly, it is not necessary for any product for implementing the present invention to achieve all of the above-described technical effects simultaneously.

Other features of the present invention and advantages thereof will become apparent from the following detailed description of exemplary embodiments of the present invention given with reference to the accompanying drawings.

### BRIEF DESCRIPTION OF THE DRAWINGS

The accompanying drawings, which are incorporated in and constitute part of this specification, show embodiments of the present invention and together with the description thereof, serve to explain the principles of the present invention.
FIG. 1 is a schematic structural view of an irregular-shaped frame for fixing a photovoltaic module according to the present invention;
FIG. 2 is a schematic view of a using state of the irregular-shaped frame for fixing a photovoltaic module according to the present invention;
FIG. 3 is a schematic view of a using state of another irregular-shaped frame for fixing a photovoltaic module according to the present invention;
FIG. 4 is a schematic view of a using state of yet another irregular-shaped frame for fixing a photovoltaic module according to the present invention;
FIG. 5 is a schematic structural view of the photovoltaic module is mounted on the irregular-shaped frame according to the present invention;
FIG. 6 is a schematic structural view of a laminated member in the present invention;
FIG. 7 is a schematic structural view of an edge covering frame in the present invention;
FIG. 8 is a schematic structural view of part of a protective frame in the photovoltaic module according to the present invention;
FIG. 9 is a front view of a photovoltaic system according to the present invention;
FIG. 10 is a partial enlarged view of portion A in FIG. 9 in another direction;
FIG. 11 is a bottom view of the photovoltaic system according to the present invention in another direction; and
FIG. 12 is a partial enlarged view of portion B in FIG. 11 in another direction.

### DETAILED DESCRIPTION

Various exemplary embodiments of the present invention will now be described in detail with reference to the accompanying drawings. It should be noted that the relative arrangement of the components and steps, the numerical expressions, and the numerical values set forth in embodiments do not limit the scope of the present invention unless specifically stated otherwise.

The following description of at least one exemplary embodiment is merely illustrative in nature and is in no way intended to limit the present invention and applications or uses thereof.

Technologies, methods, and devices known to one of ordinary skill in the relevant art may not be discussed in detail but should be regarded as part of the specification where appropriate.

In all examples shown and discussed herein, any particular value should be construed as exemplary only and not as limiting. Therefore, other examples of exemplary embodiments may have different values.

It should be noted that like reference numbers and letters refer to like items in the following drawings, and thus, once an item is defined in one drawing, it is not required be discussed further in subsequent drawings.

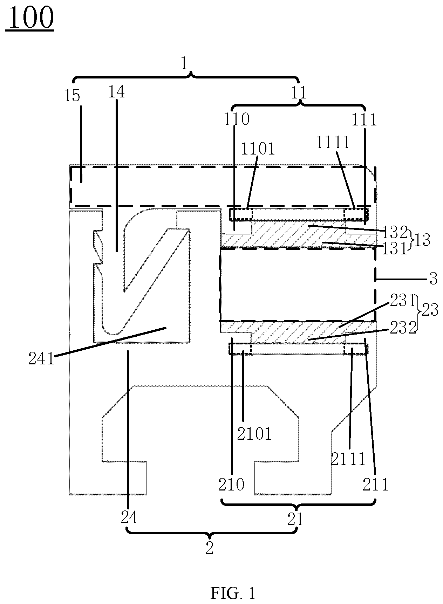

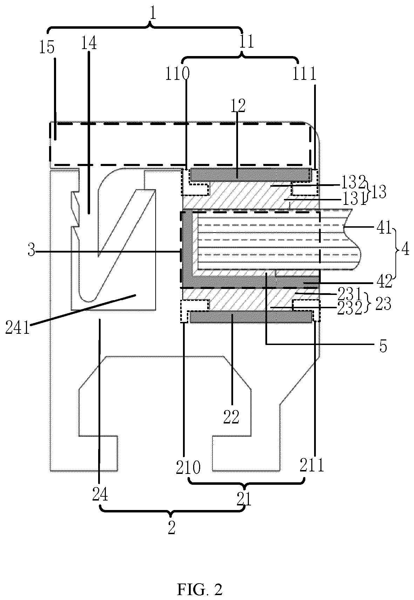

Referring to FIG. 1 and FIG. 2, FIG. 1 is a schematic structural view of an irregular-shaped frame for fixing a photovoltaic module according to the present invention; and FIG. 2 is a schematic view of a using state in the irregular-shaped frame for fixing a photovoltaic module according to the present invention. The embodiment provides an irregular-shaped frame for fixing a photovoltaic module, including an upper frame 1 and a lower frame 2 that are buckled to each other. An accommodating space 3 for placing the photovoltaic module 4 is formed between the upper frame 1 and the lower frame 2. A first engaging structure 11 is arranged on a side of the upper frame 1 adjacent to the accommodating space 3, a first reinforcing member 12 is arranged on the first engaging structure 11, a second engaging structure 21 corresponding to the first engaging structure 11 is arranged on a side of the lower frame 2 adjacent to the accommodating space 3, a second reinforcing member 22 is arranged on the second engaging structure 21, and an extending direction of the first reinforcing member 12 is the same as that of the second reinforcing member 22. A first flexible pad 13 is arranged between the first reinforcing member 12 and the photovoltaic module 4, a second flexible pad 23 is arranged between the second reinforcing member 22 and the photovoltaic module 4, and the photovoltaic module 4 is fixed among the first flexible pad 13, a side wall of part of the lower frame 2, and the second flexible pad 23.

In some embodiments, as shown in FIG. 1 and FIG. 2, the irregular-shaped frame for fixing the photovoltaic module 4 is configured to locally reinforce the photovoltaic module 4 at a mounting position of a bracket (not shown). The irregular-shaped frame for fixing the photovoltaic module includes the upper frame 1 and the lower frame 2 that are buckled to each other, and the lower frame 2 is located below the upper frame 1. The accommodating space 3 for placing the photovoltaic module 4 is formed between the upper frame 1 and the lower frame 2. A shape of the accommodating space 3 is designed to fit a shape of the photovoltaic module 4. For example, the accommodating space 3 may be a rectangular groove.

The first engaging structure 11 is arranged on the side of the upper frame 1 adjacent to the accommodating space 3, and the first engaging structure 11 is configured to be engaged with the first reinforcing member 12. Along a direction from the upper frame 1 pointing to the lower frame 2, a section of the first engaging structure 11 may have a mirror-symmetry L shape, which subsequently facilitates the engagement with the first reinforcing member 12. The first engaging structure 11 is provided with the first reinforcing member 12, the first reinforcing member 12 may be a reinforcing rib, and strength and rigidity of the upper frame 1 can be improved through the reinforcing rib. The first reinforcing member 12 may be rectangular. In use, the first reinforcing member 12 is directly inserted onto the first engaging structure 11, which is convenient and fast and facilitates a reduction of assembly difficulty of the first reinforcing member 12.

The second engaging structure 21 is arranged on the side of the lower frame 2 adjacent to the accommodating space 3, the second engaging structure 21 is configured to be engaged with the second reinforcing member 22, the second engaging structure 21 corresponds to the first engaging structure 11, and in some embodiments, the first engaging structure 11 and the second engaging structure 21 are arranged in a mirror symmetry manner. Along the direction from the upper frame 1 pointing to the lower frame 2, a section of the second engaging structure 21 may have a mirror-symmetry inverted L shape, which subsequently facilitates the engagement with the second reinforcing member 22. The second engaging structure 21 is provided with the second reinforcing member 22, the second reinforcing member 22 may also be a reinforcing rib, and strength and rigidity of the lower frame 2 can be improved through the reinforcing rib. The second reinforcing member 22 may also be rectangular. In use, the second reinforcing member 22 is directly inserted onto the second engaging structure 21, which is convenient and fast and facilitates a reduction of assembly difficulty of the second reinforcing member 22.

A length extending direction of the first reinforcing member 12 may be the same as a length extending direction of the second reinforcing member 22, a width extending direction of the first reinforcing member 12 may be the same as a width extending direction of the second reinforcing member 22, and a height extending direction of the first reinforcing member 12 may be the same as a height extending direction of the second reinforcing member 22 along the direction from the upper frame 1 pointing to the lower frame 2, which may be understood as follows: lengths, widths, and heights of the first reinforcing member 12 and the second reinforcing member 22 are kept consistent, so that strength and rigidity of the upper frame 1 and the lower frame 2 are kept consistent as much as possible, and a shear stress of the photovoltaic module 4 can be effectively borne, which subsequently facilitates a reduction of a panel exploding risk of the photovoltaic module 4.

The first flexible pad 13 is mounted between the first reinforcing member 12 and the photovoltaic module 4, the second flexible pad 23 is mounted between the second reinforcing member 22 and the photovoltaic module 4, and the photovoltaic module 4 is arranged among the first flexible pad 13, the part of the lower frame 2, and the second flexible pad 23. A top surface of the first flexible pad 13 is in soft contact with a bottom surface of part of the first reinforcing member 12, a bottom surface of the first flexible pad 13 is in soft contact with a top surface of the photovoltaic module 4, a top surface of the second flexible pad 23 is in soft contact with a bottom surface of the photovoltaic module 4, and a bottom surface of the second flexible pad 23 is in soft contact with a top surface of part of the second reinforcing member 22. When the photovoltaic module 4 includes a laminated member 41 and a protective frame 42 covering a circumferential edge of the laminated member 41, and the laminated member 41 is deformed upwards or downwards under an action force along a thickness direction of the laminated member 41, since the first flexible pad 13 is arranged between the first reinforcing member 12 and the laminated member 41, the second flexible pad 23 is arranged between the second reinforcing member 22 and the protective frame 42, the first flexible pad 13 is in soft contact with the laminated member 41, the second flexible pad 23 is in soft contact with the protective frame 42, and meanwhile, edge parts of the upper frame 1 and the lower frame 2 are not required to directly contact the laminated member 41, the panel exploding risk of the photovoltaic module 4 caused by stress concentration is more effectively avoided, and compared with the related art, the risk that the laminated member 41 directly bears all shear stresses is greatly reduced, thereby lowering the panel exploding risk of the photovoltaic module 4.

Optionally, the top surface of the first flexible pad 13 is stuck to the bottom surface of the part of the first reinforcing member 12 by using an adhesive, and the bottom surface of the first flexible pad 13 is stuck to the top surface of the photovoltaic module 4 by using an adhesive, so that the first flexible pad 13 can be firmly fixed between the first reinforcing member 12 and the photovoltaic module 4. The top surface of the second flexible pad 23 is stuck to the bottom surface of the photovoltaic module 4 by using an adhesive, and the bottom surface of the second flexible pad 23 is stuck to the top surface of the part of the second reinforcing member 22 by using an adhesive, so that the second flexible pad 23 can be firmly fixed between the second reinforcing member 22 and the photovoltaic module 4. The above adhesive may be a structural adhesive or other adhesives as long as the first flexible pad 13 can be stuck between the first reinforcing member 12 and the photovoltaic module 4, and the second flexible pad 23 can be stuck between the second reinforcing member 22 and the photovoltaic module 4, which is not specifically limited in some embodiments.

Optionally, as shown in FIG. 1 and FIG. 2, the first flexible pad 13 and the second flexible pad 23 may be foam tapes, which has good compression deformation resistance. Since the foam tapes have elasticity and durability, which can ensure that the photovoltaic module 4 is protected from shocks for a long time. The foam tapes are flame retardant and have no corrosiveness to metal; long lasting viscosity, strong initial viscosity, and good weather resistance are achieved. Certainly, according to actual conditions, other flexible materials such as silica gel and rubber can be selected, and the foam tape is only an example in some embodiments.

From one or more embodiments, the irregular-shaped frame for fixing a photovoltaic module according to some embodiments at least brings the following beneficial effects.

The irregular-shaped frame for fixing the photovoltaic module according to some embodiments includes the upper frame 1 and the lower frame 2 that are buckled to each other, the accommodating space 3 for placing the photovoltaic module 4 is formed between the upper frame 1 and the lower frame 2; the first engaging structure 11 is arranged on the side of the upper frame 1 adjacent to the accommodating space 3, the first reinforcing member 12 is arranged on the first engaging structure 11, the second engaging structure 21 corresponding to the first engaging structure 11 is arranged on the side of the lower frame 2 adjacent to the accommodating space 3, the second reinforcing member 22 is arranged on the second engaging structure 21, and the extending direction of the first reinforcing member 12 is the same as that of the second reinforcing member 22; the first flexible pad 13 is arranged between the first reinforcing member 12 and the photovoltaic module 4, the second flexible pad 23 is arranged between the second reinforcing member 22 and the photovoltaic module 4, and the photovoltaic module 4 is fixed among the first flexible pad 13, the side wall of the part of the lower frame 2, and the second flexible pad 23. By adopting the above solution, the first reinforcing member 12 and the first flexible pad 13 are introduced into the upper frame 1, and the second flexible pad 23 and the second reinforcing member 22 are introduced into the lower frame 2, so that the photovoltaic module 4 can be effectively fixed to facilitate enhancement of a protection effect on the photovoltaic module 4, the photovoltaic module 4 can also be locally enhanced to facilitate an improvement of reliability of the photovoltaic module 4, and meanwhile, the shear stress of an edge position where the irregular-shaped frame 100 is connected to the photovoltaic module 4 is subsequently reduced as much as possible, so as to reduce the panel exploding risk of the photovoltaic module 4 as much as possible. The first reinforcing member 12 and the second reinforcing member 22 are conveniently engaged through the first engaging structure 11 and the second engaging structure 21, thus lowering difficulty of assembly between the first reinforcing member 12 and the upper frame 1 and between the second reinforcing member 22 and the lower frame 2.

In some embodiments, with continued reference to FIG. 1 and FIG. 2, the first engaging structure 11 includes a first engaging member 110 and a second engaging member 111 that are arranged oppositely. The first engaging member 110 and the second engaging member 111 are arranged in a mirror symmetry manner. Along the direction from the upper frame 1 pointing to the lower frame 2, a section of the first engaging member 110 is L-shaped. The first reinforcing member 12 is engaged between the first engaging member 110 and the second engaging member 111, and the first engaging structure 11 is simple in overall structure and high in practicability, facilitates insertion of the first reinforcing member 12 between the first engaging member 110 and the second engaging member 111, and is beneficial to shortening an assembly time of the first reinforcing member 12 and the first engaging structure 11, thereby improving an assembly efficiency of the first engaging structure 11 and the first reinforcing member 12. The second engaging structure 21 includes a third engaging member 210 and a fourth engaging member 211 that are arranged oppositely, the third engaging member 210 and the fourth engaging member 211 are arranged in a mirror symmetry manner, and along the direction from the upper frame 1 pointing to the lower frame 2, a section of the third engaging member 210 has an inverted-L-shaped structure, the second reinforcing member 22 is engaged between the third engaging member 210 and the fourth engaging member 211, and the second engaging structure 21 is simple in overall structure and high in practicability, facilitates insertion of the second reinforcing member 22 between the third engaging member 210 and the fourth engaging member 211, and is beneficial to shortening an assembly time of the second reinforcing member 22 and the second engaging structure 21, thereby improving an assembly efficiency of the second engaging structure 21 and the second reinforcing member 22.

In some embodiments, as shown in FIG. 1 and FIG. 2, the first engaging member 110 includes a first engaging groove 1101, the second engaging member 111 includes a second engaging groove 1111 corresponding to the first engaging groove 1101. Two ends of the first reinforcing member 12 are located in the first engaging groove 1101 and the second engaging groove 1111 respectively along a width direction of the upper frame 1, and a placing space is provided for the first reinforcing member 12 through the first engaging groove 1101 and the second engaging groove 1111, so as to insert the first reinforcing member 12 into the first engaging member 110 and the second engaging member 111. The third engaging member 210 includes a third engaging groove 2101, the fourth engaging member 211 includes a fourth engaging groove 2111 corresponding to the third engaging groove 2101, two ends of the second reinforcing member 22 are located in the third engaging groove 2101 and the fourth engaging groove 2111 respectively along a width direction of the lower frame 2, and a placing space is provided for the second reinforcing member 22 through the third engaging groove 2101 and the fourth engaging groove 2111, so as to insert the second reinforcing member 22 into the third engaging member 210 and the fourth engaging member 211.

It should be noted that the first reinforcing member 12 is assembled between the first engaging member 110 and the second engaging member 111 in advance, and the second reinforcing member 22 is assembled between the third engaging member 210 and the fourth engaging member 211 in advance, so that during subsequent use, the first reinforcing member 12 and the first engaging structure 11 are not required to be assembled in site, and the second reinforcing member 22 and the second engaging structure 21 are not required to be assembled in site, which can shorten the assembly time greatly, thereby improving an assembly efficiency of the bracket, the irregular-shaped frame 100, and the photovoltaic module 4.

In some embodiments, with continued reference to FIG. 1 and FIG. 2, the first flexible pad 13 includes a first sub-portion 131 and a second sub-portion 132 connected to the first sub-portion 131. The first sub-portion 131 is located on a side of the second sub-portion 132 adjacent to the photovoltaic module 4. Specially, the first sub-portion 131 is located below the second sub-portion 132, and the first sub-portion 131 and the second sub-portion 132 form an inverted-T-shaped structure, which can be understood as follows: along the direction from the upper frame 1 pointing to the lower frame 2, a section of the first flexible pad 13 has an inverted-T-shaped structure. Since along the direction from the upper frame 1 pointing to the lower frame 2, the sections of the first engaging member 110 and the second engaging member 111 have the mirror-symmetry L-shaped structures, when the first sub-portion 131 and the second sub-portion 132 form the inverted-T-shaped structure, the structure of the first engaging structure 11 is favorably matched, and when the first flexible pad 13 is engaged between the first engaging member 10 and the second engaging member 111 below the first reinforcing member 12, and meanwhile, the first reinforcing member 12 is fixed between the first engaging structure 11 and the first flexible pad 13, the first reinforcing member 12 can be prevented from falling, thereby lowering the panel exploding risk of the photovoltaic module 4.

The second flexible pad 23 includes a third sub-portion 231 and a fourth sub-portion 232 connected to the third sub-portion 231. The third sub-portion 231 is located on a side of the fourth sub-portion 232 adjacent to the photovoltaic module 4. In some embodiments, the third sub-portion 231 is located above the fourth sub-portion 232, and the third sub-portion 231 and the fourth sub-portion 232 form a T-shaped structure, which can be understood as follows: along the direction from the upper frame 1 pointing to the lower frame 2, a section of the second flexible pad 23 has a T-shaped structure. Since along the direction from the upper frame 1 to the lower frame 2, the sections of the third engaging member 210 and the fourth engaging member 211 have the mirror-symmetry inverted-L-shaped structures, when the third sub-portion 231 and the fourth sub-portion 232 form the T-shaped structure, the structure of the second engaging structure 21 is favorably matched, and when the second flexible pad 23 is engaged between the third engaging member 10 and the fourth engaging member 211 above the second reinforcing member 22, and meanwhile, the second reinforcing member 22 is fixed between the second engaging structure 21 and the second flexible pad 23, the second reinforcing member 22 is prevented from falling, thereby lowering the panel exploding risk of the photovoltaic module 4.

In some embodiments, referring to FIG. 1 and FIG. 2, a width of the first reinforcing member 12 along the width direction of the upper frame 1 is less than a width of the first sub-portion 131 along the width direction of the upper frame 1; a width of the second reinforcing member 22 along the width direction of the lower frame 2 is less than a width of the third sub-portion 231 along the width direction of the lower frame 2.

In some embodiments, along the width direction of the upper frame 1, the width of the first sub-portion 131 is greater than the width of the first reinforcing member 12, so that a gap can be prevented from being generated among the first engaging structure 11, the side wall of the part of the lower frame 2, and the photovoltaic module 4, and when the laminated member 41 is deformed upwards or downwards under the action force along the thickness direction of the laminated member 41, the edge part of the first engaging structure 11 is prevented from directly contacting the laminated member 41, thereby more effectively avoiding the panel exploding risk of the photovoltaic module 4 caused by stress concentration.

Along the width direction of the lower frame 2, the width of the third sub-portion 231 is greater than the width of the second reinforcing member 22, so that a gap can be prevented from being generated among the second engaging structure 21, the side wall of the part of the lower frame 2, and the photovoltaic module 4, and when the laminated member 41 is deformed upwards or downwards under the action force along the thickness direction of the laminated member 41, the edge part of the second engaging structure 21 is prevented from directly contacting the protective frame 42, thereby more effectively avoiding the panel exploding risk of the photovoltaic module 4 caused by stress concentration.

In some embodiments, referring to FIG. 1 and FIG. 2, the upper frame 1 further includes a buckle 14, and the buckle 14 is arranged opposite to the first engaging structure 11. The lower frame 2 further includes a connecting member 24 connected to the second engaging structure 21, a buckle accommodating groove 241 is formed in the connecting member 24, the buckle 14 is engaged in the buckle accommodating groove 241. A section of the buckle 14 has a barb shape in the direction from the upper frame 1 to the lower frame 2, and when the upper frame 1 and the lower frame 2 are buckled and fixed, the buckle 14 can extend into the buckle accommodating groove 241. The section of the buckle 14 has the barb shape in the direction from the upper frame 1 to the lower frame 2, so that the upper frame 1 and the lower frame 2 can be more firmly fixed through the buckle 14.

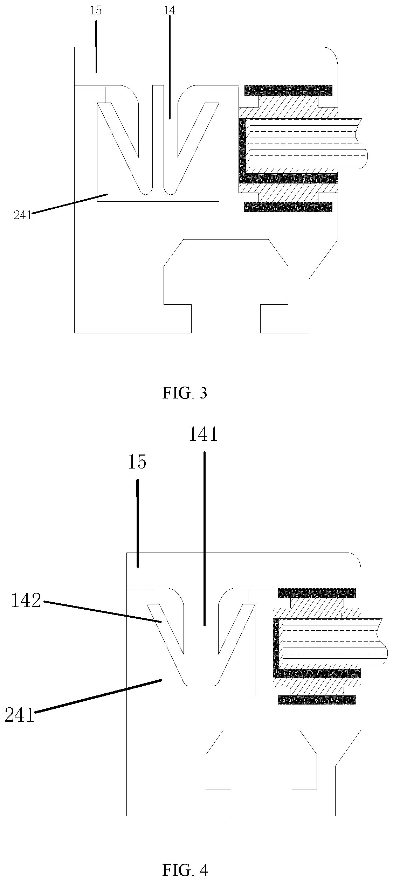

FIGS. 1 and 2 illustrate an embodiment in which only one buckle 14 is provided. In an alternative embodiment, referring to FIG. 3, two buckles 14 are provided, and the two buckles 14 are spaced apart and arranged opposite each other. The two buckles 14 can extend into and be engaged into the buckle accommodating slot 241.

In an alternative embodiment, referring to FIG. 4, the buckle 14 includes a body portion 141 and a plurality of buckle arms 142 extending upwardly and obliquely from a bottom of the body portion 141. The plurality of buckle arms 142 can extend into and be engaged into the buckle accommodation slot 241.

In some embodiments, with continued reference to FIG. 1 and FIG. 2, the upper frame 1 further includes a transverse plate 15. A length extending direction of the transverse plate 15 is the same as the length extending direction of the first reinforcing member 12 and/or the second reinforcing member 22, and the buckle 14 and the first engaging structure 11 are connected to the transverse plate 15. In some embodiments, the buckle 14 and the first engaging structure 11 are fixedly connected to the transverse plate 15, respectively. The buckle 14 and the first engaging structure 11 are respectively located on two opposite sides of the transverse plate 15 along the width direction of the upper frame 1. The buckle 14 corresponds to the buckle accommodating groove 241 of the connecting member 24, and the first engaging structure 11 corresponds to the photovoltaic module 4, which facilitates subsequent assembly of the upper frame 1 and the lower frame 2.

Optionally, the transverse plate 15, the buckle 14, and the first engaging structure 11 are of an integrated structure, which not only can increase stability of the upper frame 1, but also can greatly reduce an assembly time cost of the upper frame 1, thereby improving the assembly efficiency.

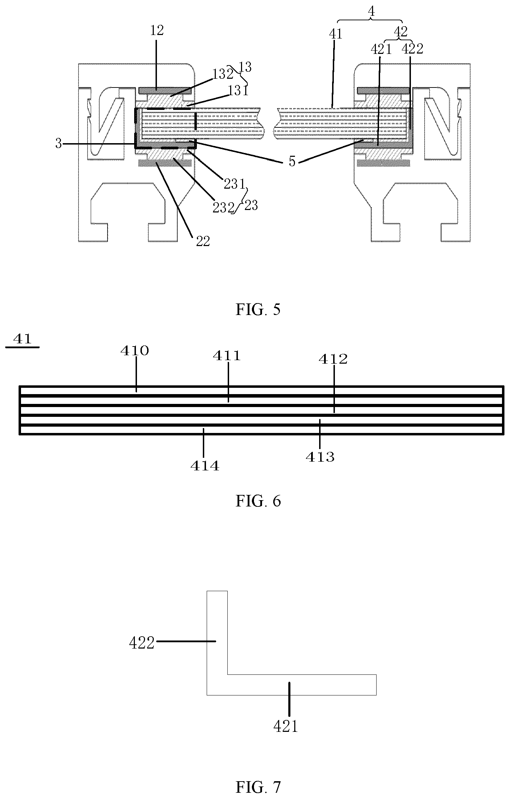

Referring to FIG. 1, FIG. 2, and FIG. 5 to FIG. 7, FIG. 5 is a schematic structural view in which the photovoltaic module is mounted on the irregular-shaped frame according to the present invention, FIG. 6 is a schematic structural view of the laminated member in the present invention, and FIG. 7 is a schematic structural view of an edge covering frame in the present invention. The embodiment further provides a photovoltaic module 4, when being mounted, the photovoltaic module 4 is arranged in an accommodating space 3 of the irregular-shaped frame 100, and the irregular-shaped frame is the above irregular-shaped frame 100. The photovoltaic module 4 includes a laminated member 41 and a protective frame 42, and the protective frame 42 covers a circumferential edge of the laminated member 41. The protective frame 42 includes a bottom plate 421 and a side plate 422 connected to the bottom plate 421, a bottom wall of the circumferential edge of the laminated member 41 is arranged on the bottom plate 421, and a side wall of the circumferential edge of the laminated member 41 is adjacent to the side plate 422.

Specially, as shown in FIG. 5 and FIG. 6, when being mounted, the photovoltaic module 4 is arranged in the accommodating space 3 of the irregular-shaped frame 100. The photovoltaic module 4 includes the laminated member 41 and the protective frame 42, the protective frame 42 covers the circumferential edge of the laminated member 41. The laminated member 41 includes a front cover plate 410, a first packaging adhesive film 411, a solar cell string 412, a second packaging adhesive film 413, and a back cover plate 414 that are stacked. The solar cell string 412 is formed by connecting a plurality of solar cells (not shown), the front cover plate 410 can be glass, the back cover plate 414 can be glass or a back plate. The first packaging adhesive film 411 and the second packaging adhesive film 413 can be ethylene vinyl acetate (EVA) adhesive films, polyolyaltha olfin (POE) adhesive films, or polyethylene terephthalate (PET) adhesive films respectively. EVA has the advantages of an excellent adhesive performance, a low melting temperature, good melt fluidity and flexibility, a low cost, convenient construction, or the like. Due to introduction of vinyl acetate monomers into a molecular chain of the EVA, high crystallinity can be reduced, and toughness, impact resistance, filler intermiscibility, and a heat sealing performance can be improved. Due to a molecular structure, POE (random copolymer elastomer of ethylene and high-carbon α-olefin) has an excellent mechanical performance, rheological performance and ultraviolet resistance, and also has the characteristics of good affinity with polyolefin, good low-temperature toughness, a high cost performance, or the like. PVB (polyvinyl butyral) can be dissolved in methanol, ethanol, ketone, alkyl halide, and aromatic hydrocarbon solvents, has good intermiscibility with phthalate, sebacate benzene plasticizers, cellulose nitrate, phenolic resin, epoxy resin, or the like, has high transparency, cold resistance, impact resistance, and ultraviolet radiation resistance, and has a good adhesive force with metal, glass, wood, ceramics, fiber products, or the like. The solar cell may be a PERC (passivated emitter rear cell), a TOPCon (tunnel oxide passivated contact) cell, a HJT (heterojunction with intrinsic thin-film) cell, an IBC (interdigitated back contact) cell, a perovskite cell, or the like.

In some embodiments, the protective frame 42 includes the bottom plate 421 and the side plate 422 connected to the bottom plate 421. An L-shaped structure may be formed by the bottom plate 421 and the side plate 422, the bottom wall of the circumferential edge of the laminated member 41 is arranged on the bottom plate 421, the side wall of the circumferential edge of the laminated member 41 is adjacent to the side plate 422. The bottom plate 421 and the bottom wall of the circumferential edge of the laminated member 41 may be adhered by using silica gel 5, and the side wall of the circumferential edge of the laminated member 41 and the side plate 422 may also be adhered by using silica gel 5, which can be understood as follows: the protective frame 42 has only a B surface and a C surface, but does not have an A surface. Since the protective frame 42 is an A-surface-free frame, the front cover plate 410 of the laminated member 41 is free of a masking material, so that dirt on a surface of the laminated member 41 can be smoothly separated from the assembly and discharged under rain washing, thus avoiding that water stains are stored at the edge for a long time to soak the edge of the photovoltaic module 4, and meanwhile increasing an illumination area of the laminated member 41 to improve a photovoltaic efficiency.

During specific assembly, the protective frame 42 covering the laminated member 41 is directly mounted in the accommodating space 3. The bottom plate 421 is in direct contact with the second flexible pad 23, the side plate 422 abuts against a side wall of the connecting member 24 in the lower frame 2, and a side of the front cover plate 410 away from the first packaging adhesive film 411 and a top surface of the side plate 422 are adhered to the first flexible pad 13. In the process that the photovoltaic module 4 bears a load, since the first flexible pad 13, the first reinforcing member 12, and the transverse plate 15 are arranged above the edge of the laminated member 41 in sequence, and the bottom plate 421, the second flexible pad 23, and the second reinforcing member 22 are designed below the edge of the laminated member 41 in sequence, panel exploding of the laminated member 41 caused by stress concentration is greatly reduced, and meanwhile, a dust accumulation phenomenon of the front cover plate 410 can also be avoided.

From one or more embodiments, the photovoltaic module 4 according to some embodiments at least brings the following beneficial effects.

The embodiment provides the photovoltaic module 4, when being mounted, the photovoltaic module 4 is arranged in the accommodating space 3 of the irregular-shaped frame 100, and the irregular-shaped frame 100 is the above irregular-shaped frame 100. The photovoltaic module 4 includes the laminated member 41 and the protective frame 42, the protective frame 42 covers the circumferential edge of the laminated member 41. The protective frame 42 includes the bottom plate 421 and the side plate 422 connected to the bottom plate 421, the bottom wall of the circumferential edge of the laminated member 41 is arranged on the bottom plate 421, and the side wall of the circumferential edge of the laminated member 41 is adjacent to the side plate 422. By adopting the above solution, the protective frame 42 and the irregular-shaped frame 100 cooperate with each other, so that a shear stress existing at an edge between the protective frame 42 and the irregular-shaped frame 100 can be reduced, the illumination area of the laminated member 41 can be increased to improve the photovoltaic efficiency due to direct cancel of the A surface of the protective frame 42, and meanwhile, dust accumulation at a front surface of the laminated member 41 is avoided.

Optionally, as shown in FIG. 5 and FIG. 7, the protective frame 42 is made of zinc-aluminum-magnesium-plated steel or aluminum alloy, which has better elasticity than steel, so as to prevent the frame from damaging the laminated member 41, and meanwhile can reduce a cost.

Optionally, a height of the side plate 422 may range from 0.5mm to 1.3mm along the direction from the upper frame 1 pointing to the lower frame 2.

Specially, as shown in FIG. 5 and FIG. 7, if the height of the side plate 422 is excessively large and larger than a thickness of the laminated member 41 along the direction from the upper frame 1 pointing to the lower frame 2, the top surface of the side plate 422 is not flush with the surface of the laminated member 41, which is not favorable for protecting the laminated member 41, and may also increase the cost. If the height of the side plate 422 is excessively low, part of the edge of the laminated member 41 is exposed from an outer surface of the side plate 422, which is also not beneficial to protecting the laminated member 41. In some embodiments, the height of the side plate 422 can be designed to range from 0.5mm to 1.3mm in the direction from the upper frame 1 to the lower frame 2, so as to ensure that the front surface of the laminated member 41 is flush with the top surface of the side plate 422 as much as possible, and subsequently, the first flexible pad 13 can be directly stuck to the front surface of the laminated member 41 and the top surface of the side plate 422, so as to protect the laminated member 41 more effectively, and meanwhile, the cost can be reduced. Specially, the height of the side plate 422 may be 0.5mm, 0.7mm, 0.9mm, 1.1mm, or 1.3mm along the direction from the upper frame 1 pointing to the lower frame 2.

It should be noted that when the first flexible pad 13 includes the first sub-portion 131 and the second sub-portion 132 connected to the first sub-portion 131, the first sub-portion 131 is located on the side of the second sub-portion 132 adjacent to the photovoltaic module 4. The second flexible pad 23 includes the third sub-portion 231 and the fourth sub-portion 232 connected to the third sub-portion 231, and the third sub-portion 231 is located on the side of the fourth sub-portion 232 adjacent to the photovoltaic module 4. The width of the first sub-portion 131 and/or the third sub-portion 231 is equal to a width of the bottom plate 421 along the width direction of the upper frame 1 and/or the lower frame 2, so as to effectively fill a gap between the protective frame 42 and the irregular-shaped frame 100.

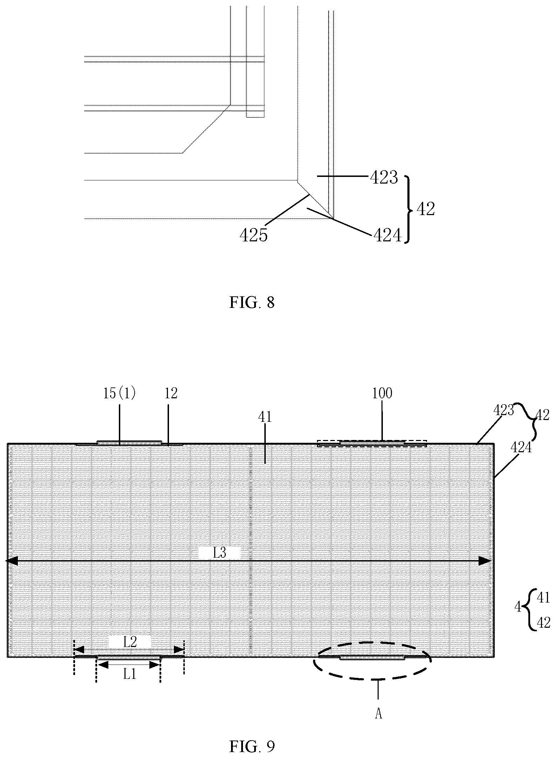

In some embodiments, referring to FIG. 8, FIG. 8 is a schematic structural view of part of the protective frame in the photovoltaic module according to the present invention. The protective frame 42 includes a long-edge protective frame 423 and a short-edge protective frame 424 connected to the long-edge protective frame 423. A head end and a tail end of the long-edge protective frame 423 and a head end and a tail end of the short-edge protective frame 424 are provided with inclined surfaces 425 with inclined angles of 45 degrees, the inclined surfaces 425 with the inclined angles of 45 degrees in the long-edge protective frame 423 and the inclined surfaces 425 with the inclined angles of 45 degrees in the short-edge protective frame 424 are spliced together, and a laser welding technology is adopted for the connection at joint positions subsequently, so that the connection between the long-edge protective frame 423 and the short-edge protective frame 424 is more stable. Since the head end and the tail end of the long-edge protective frame 423 and the head end and the tail end of the short-edge protective frame 424 are spliced by the inclined surfaces 425 with the inclined angles of 45 degrees, an attractive effect can also be brought.

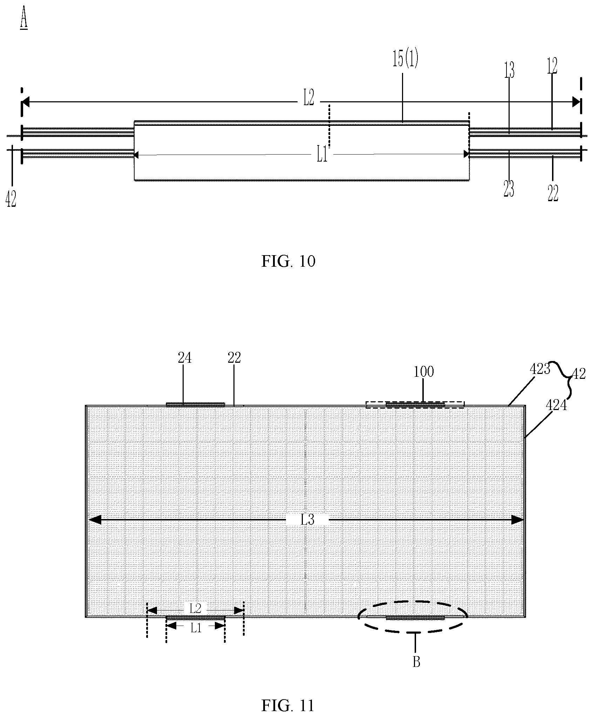

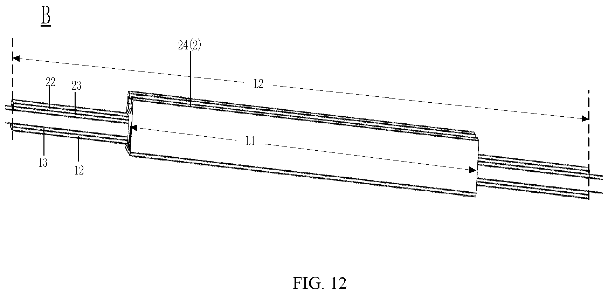

Referring to FIG. 1, FIG. 2, FIG. 5, and FIG. 9 to FIG. 12, FIG. 9 is a front view of a photovoltaic system according to the present invention, FIG. 10 is a partial enlarged view of A in FIG. 9 in another direction, FIG. 11 is a bottom view of the photovoltaic system according to the present invention in another direction, and FIG. 12 is a partial enlarged view of B in FIG. 11 in another direction. The embodiment further provides a photovoltaic system, including a bracket (not shown), the above photovoltaic module 4, and the irregular-shaped frame 100. The photovoltaic module 4 is arranged in the accommodating space 3, and when the first flexible pad 13 is arranged between the first reinforcing member 12 and the photovoltaic module 4, the first flexible pad 13 is arranged on the top surface of the photovoltaic module 4, and the bottom surface of the protective frame 42 is connected to the second flexible pad 23. The lower frame 2 is connected to the bracket.

In some embodiments, as shown in FIG. 5 and FIG. 9 to FIG. 12, the photovoltaic system includes the bracket, the above photovoltaic module 4, and the above irregular-shaped frame 100. The photovoltaic module 4 includes the laminated member 41 and the protective frame 42, and the protective frame 42 covers the circumferential edge of the laminated member 41. The protective frame 42 includes two long-edge protective frames 423 and two short-edge protective frames 424, the irregular-shaped frames 100 are mounted on the two long-edge protective frames 423 respectively. Two irregular-shaped frames 100 may be provided, the two irregular-shaped frames 100 may be arranged along length directions of the long-edge protective frames 423, the bracket is located below the photovoltaic module 4, and the bracket and the lower frame 2 in the irregular-shaped frame 100 are assembled together.

The photovoltaic module 4 is arranged in the accommodating space 3 of the irregular-shaped frame 100. When the first flexible pad 13 is arranged between the first reinforcing member 12 and the photovoltaic module 4, the first flexible pad 13 is arranged on the top surface of the laminated member 41, the first flexible pad 13 can be directly adhered to the top surface of the laminated member 41, the bottom surface of the protective frame 42 directly abuts against the top surface of the second flexible pad 23, and when the laminated member 41 is subsequently deformed upwards or downwards in the thickness direction of the laminated member 41, the shear stress of the laminated member 41 can be reduced, thereby avoiding the panel exploding risk of the laminated member 41.

In some embodiments, as shown in FIG. 2, FIG. 5, FIG. 9, and FIG. 10, when the upper frame 1 includes the transverse plate 15 and the lower frame 2 includes the connecting member 24, a length of the transverse plate 15 is equal to a length of the connecting member 24 along the length direction of the irregular-shaped frame 100. When the first flexible pad 13 is arranged between the first reinforcing member 12 and the photovoltaic module 4 and the second flexible pad 23 is arranged between the second reinforcing member 22 and the photovoltaic module 4, the lengths of the first reinforcing member 12, the second reinforcing member 22, the first flexible pad 13, and/or the second flexible pad 23 are equal along the length direction of the irregular-shaped frame 100. Along the length direction of the irregular-shaped frame 100, the length of the first reinforcing member 12 is greater than that of the transverse plate 15. In some embodiments, along the length direction of the irregular-shaped frame 100, the lengths of the first reinforcing member 12 and the first flexible pad 13 introduced into the upper frame 1 and the second reinforcing member 22 introduced into the lower frame 2 are consistent, the lengths of the transverse plate 15 in the upper frame 1 and the connecting member 24 in the lower frame 2 are consistent, and the length of the first reinforcing member 12 in the upper frame 1 is inconsistent with the length of the transverse plate 15 in the upper frame 1. For example, along the length direction of the irregular-shaped frame 100, the length of the first reinforcing member 12 in the upper frame 1 is greater than the length of the transverse plate 15 in the upper frame 1, and along the length direction of the irregular-shaped frame 100, since the lengths of the first reinforcing member 12, the second reinforcing member 22, the first flexible pad 13, and the second flexible pad 23 are increased, the protective frame 42 can bear the shear stress existing at the edge of the irregular-shaped frame 100, thereby reducing a panel exploding rate.

In some embodiments, along the length direction of the irregular-shaped frame 100, the length of the transverse plate 15 and/or the connecting member 24 is L1, the length of the first reinforcing member 12, the second reinforcing member 22, the first flexible pad 13, and/or the second flexible pad 23 is L2, and L2-L1≥100mm.

In some embodiments, as shown in FIG. 9 and FIG. 10, along the length direction of the irregular-shaped frame 100, the length of the transverse plate 15 and/or the connecting member 24 is L1, and the length of the first reinforcing member 12, the second reinforcing member 22, the first flexible pad 13, and/or the second flexible pad 23 is L2. If L2-L1 is excessively small to cause the length of the first reinforcing member 12, the second reinforcing member 22, the first flexible pad 13, and/or the second flexible pad 23 along the length direction of the irregular-shaped frame 100 to be excessively small, the shear stress may exist at the edge position where the irregular-shaped frame 100 is connected to the protective frame 42, and the protective frame 42 cannot directly bear the shear stress, thereby causing the panel exploding phenomenon. In some embodiments, L2-L1≥100mm, and since the lengths of the first reinforcing member 12, the first flexible pad 13, and the second reinforcing member 22 along the length direction of the irregular-shaped frame 100 are increased, the shear stress which may exist at the edge position where the irregular-shaped frame 100 is connected to the protective frame 42 may be more effectively reduced, thereby more effectively reducing the panel exploding phenomenon of the laminated member 41 caused by the large shear stress.

In some embodiments, as shown in FIG. 9 and FIG. 11, the length of the laminated member 41 is L3, and 3≤L3/L2≤7.14. By adopting the solution, along the length direction of the irregular-shaped frame 100, the length of the first reinforcing member 12, the second reinforcing member 22, the first flexible pad 13, and/or the second flexible pad 23 is greater than the length of the transverse plate 15 and the connecting member 24, and a maximum value of the length of the first reinforcing member 12, the second reinforcing member 22, the first flexible pad 13, and/or the second flexible pad 23 is controlled to be smaller than a maximum length of the laminated member 41, so as to protect the laminated member 41 and meanwhile reduce the cost.

In some embodiments, with continued reference to FIG. 9 and FIG. 11, if the length of the irregular-shaped frame 100 is excessively large along the length extending direction of the photovoltaic module 4, a manufacturing cost of the irregular-shaped frame 100 is increased, and if the length of the irregular-shaped frame 100 is excessively small, a large shear stress is generated at the edge of the irregular-shaped frame 100, so that a large shear stress is generated inside the photovoltaic module 4. In some embodiments, the length of the irregular-shaped frame 100 is designed to range from 20cm to 50cm along the length extending direction of the photovoltaic module 4, which not only can reduce the manufacturing cost of the irregular-shaped frame 100, but also is beneficial to reducing the large shear stress generated at the edge of the irregular-shaped frame 100, thereby reducing the large shear stress generated inside the photovoltaic module 4.

Although some embodiments of the present invention have been described in detail by way of examples, it should be understood by those skilled in the art that the above examples are for illustration only and are not intended to limit the scope of the present invention. It will be appreciated by those skilled in the art that modifications can be made to the above embodiments without departing from the scope and spirit of the present invention. The scope of the present invention is defined by the appended claims.

## Claims

1. An irregular-shaped frame for fixing a photovoltaic module, comprising an upper frame and a lower frame that are buckled to each other, and an accommodating space for placing the photovoltaic module being formed between the upper frame and the lower frame;
a first engaging structure being arranged on a side of the upper frame adjacent to the accommodating space, a first reinforcing member being arranged on the first engaging structure, a second engaging structure corresponding to the first engaging structure being arranged on a side of the lower frame adjacent to the accommodating space, a second reinforcing member being arranged on the second engaging structure, an extending direction of the first reinforcing member being the same as an extending direction of the second reinforcing member, a first flexible pad being arranged between the first reinforcing member and the photovoltaic module, a second flexible pad being arranged between the second reinforcing member and the photovoltaic module, and the photovoltaic module being fixed among the first flexible pad, a side wall of part of the lower frame, and the second flexible pad.

2. The irregular-shaped frame for fixing the photovoltaic module according to claim 1, wherein the first engaging structure comprises a first engaging member and a second engaging member that are arranged oppositely, the first engaging member and the second engaging member are arranged in a mirror symmetry manner, in a direction from the upper frame pointing to the lower frame, a section of the first engaging member is L-shaped, and the first reinforcing member is engaged between the first engaging member and the second engaging member;
the second engaging structure comprises a third engaging member and a fourth engaging member which are arranged oppositely, the third engaging member and the fourth engaging member are arranged in a mirror symmetry manner, along the direction from the upper frame pointing to the lower frame, a section of the third engaging member is inverted-L-shaped, and the second reinforcing member is engaged between the third engaging member and the fourth engaging member.

3. The irregular-shaped frame for fixing the photovoltaic module according to claim 2, wherein the first engaging member comprises a first engaging groove, the second engaging member comprises a second engaging groove corresponding to the first engaging groove, and two ends of the first reinforcing member are located in the first engaging groove and the second engaging groove respectively along a width direction of the upper frame;
the third engaging member comprises a third engaging groove, the fourth engaging member comprises a fourth engaging groove corresponding to the third engaging groove, and two ends of the second reinforcing member are located in the third engaging groove and the fourth engaging groove respectively along a width direction of the lower frame.

4. The irregular-shaped frame for fixing the photovoltaic module according to claim 2, wherein the first flexible pad comprises a first sub-portion and a second sub-portion connected to the first sub-portion, the first sub-portion is located on a side of the second sub-portion adjacent to the photovoltaic module, and the first sub-portion and the second sub-portion form an inverted-T-shaped structure;
the second flexible pad comprises a third sub-portion and a fourth sub-portion connected to the third sub-portion, the third sub-portion is located on a side of the fourth sub-portion adjacent to the photovoltaic module, and the third sub-portion and the fourth sub-portion form a T-shaped structure.

5. The irregular-shaped frame for fixing the photovoltaic module according to claim 4, wherein a width of the first reinforcing member along the width direction of the upper frame is less than a width of the first sub-portion along the width direction of the upper frame;
a width of the second reinforcing member along the width direction of the lower frame is less than a width of the third sub-portion along the width direction of the lower frame.

6. The irregular-shaped frame for fixing the photovoltaic module according to claim 1, wherein the upper frame further comprises a buckle, and the buckle is arranged opposite to the first engaging structure;
wherein the lower frame further comprises a connecting member connected to the second engaging structure, a buckle accommodating groove is formed in the connecting member, the buckle is engaged in the buckle accommodating groove, and a section of the buckle has a barb shape in the direction from the upper frame pointing to the lower frame.

7. The irregular-shaped frame for fixing the photovoltaic module according to claim 6, wherein the upper frame further comprises a transverse plate, the buckle and the first engaging structure are connected to the transverse plate, respectively, and the buckle and the first engaging structure are located on two opposite sides of the transverse plate along a width direction of the upper frame.

8. The irregular-shaped frame for fixing the photovoltaic module according to claim 6, wherein two buckles are provided, and the two buckles are spaced apart and arranged opposite each other.

9. The irregular-shaped frame for fixing the photovoltaic module according to claim 6, wherein the buckle includes a body portion and a plurality of buckle arms extending upwardly and obliquely from a bottom of the body portion.

10. A photovoltaic module, when being mounted, the photovoltaic module being arranged in an accommodating space of the irregular-shaped frame according to any one of claims 1 to 9; the photovoltaic module comprising:
a laminated member and a protective frame, and the protective frame covering a circumferential edge of the laminated member;
wherein the protective frame comprises a bottom plate and a side plate connected to the bottom plate, a bottom wall of the circumferential edge of the laminated member is arranged on the bottom plate, and a side wall of the circumferential edge of the laminated member is adjacent to the side plate.

11. The photovoltaic module according to claim 10, wherein the protective frame comprises a long-edge protective frame and a short-edge protective frame connected to the long-edge protective frame, and a head end and a tail end of the long-edge protective frame and a head end and a tail end of the short-edge protective frame are provided with inclined surfaces with inclined angles of 45 degrees.

12. A photovoltaic system, comprising a bracket, the photovoltaic module according to claim 10, and the irregular-shaped frame according to any one of claims 1 to 9;
wherein the photovoltaic module is arranged in the accommodating space, when the first flexible pad is arranged between the first reinforcing member and the photovoltaic module, the first flexible pad is arranged on a top surface of the photovoltaic module, a bottom surface of the protective frame is connected to the second flexible pad, and the lower frame is connected to the bracket.

13. The photovoltaic system according to claim 12, wherein when the upper frame comprises the transverse plate and the lower frame comprises the connecting member, a length of the transverse plate is equal to a length of the connecting member along a length direction of the irregular-shaped frame;
when the first flexible pad is arranged between the first reinforcing member and the photovoltaic module and the second flexible pad is arranged between the second reinforcing member and the photovoltaic module, lengths of the first reinforcing member, the second reinforcing member, the first flexible pad, and/or the second flexible pad are equal along a length direction of the irregular-shaped frame;
wherein along a length direction of the irregular-shaped frame, a length of the first reinforcing member is greater than a length of the transverse plate.

14. The photovoltaic system according to claim 13, wherein along the length direction of the irregular-shaped frame, the length of the transverse plate and/or the connecting member is L1, the length of the first reinforcing member, the second reinforcing member, the first flexible pad, and/or the second flexible pad is L2, and L2-L1≥100mm.

15. The photovoltaic system according to claim 14, wherein a length of the laminated member is L3, and 3≤L3/L2≤7.14.
